Europäisches Patentamt

European Patent Office

Office européen des brevets

(11) Veröffentlichungsnummer : **0 494 430 B1**

## (12) EUROPÄISCHE PATENTSCHRIFT

(45) Veröffentlichungstag der Patentschrift :
07.09.94 Patentblatt 94/36

(21) Anmeldenummer : 91121944.2

(22) Anmeldetag : 20.12.91

(51) Int. Cl.$^5$ : **G01B 7/12**

(30) Priorität : **11.01.91 DE 4100615**

(43) Veröffentlichungstag der Anmeldung :
**15.07.92 Patentblatt 92/29**

(45) Bekanntmachung des Hinweises auf die
Patenterteilung :
**07.09.94 Patentblatt 94/36**

(84) Benannte Vertragsstaaten :
**AT DE ES FR GB IT**

(56) Entgegenhaltungen :
**EP-A- 0 124 475
DE-A- 1 918 108
US-A- 3 172 208
US-A- 4 700 484
PATENT ABSTRACTS OF JAPAN vol. 10, no.
180 (P-471)(2236) 24. Juni 1986 & JP-A-61 028
802**

(56) Entgegenhaltungen :
**PATENT ABSTRACTS OF JAPAN vol. 5, no. 88
(P-65)(760) 9. Juni 1981 & JP-A-56 033 705
PATENT ABSTRACTS OF JAPAN vol. 13, no.
222 (P-876)(3570) 24. Mai 1989 & JP-A-01 035
605**

(73) Patentinhaber : **J.M. Voith GmbH
St. Pöltener-Strasse 43
D-89522 Heidenheim (DE)**

(72) Erfinder : **Bähr, Theodor
Mühlestrasse 6
W-7920 Heidenheim (DE)**
Erfinder : **Biener, Peter
Bolheimer Strasse 8
W-7922 Herbrechtingen (DE)**
Erfinder : **Krattenmacher, Gerd
Mainzer Strasse 68
W-7000 Stuttgart-Weilimdorf (DE)**

(74) Vertreter : **Weitzel, Wolfgang, Dr.-Ing. et al
Friedenstrasse 10
D-89522 Heidenheim (DE)**

(54) **Verfahren zur Messung des Durchmessers von Zylindern, insbesondere von Walzen.**

**Beschreibung**

Die Erfindung betrifft ein Verfahren zur Messung des Durchmessers von Zylindern. Ein solches Verfahren ist bekannt aus der FR-PS 14 27 548, vorzugsweise in einer Werkzeugmaschine (Walzenschleifmaschine). Bei dieser Einrichtung ist ein Drehgeber vorgesehen, der mit einem Kontaktrad gekuppelt ist, das an der Oberfläche des Zylinders abrollbar ist. Dieses Kontaktrad ist auf einem drehbaren, stabförmigen Träger gelagert, wobei dieser eine Impulseinrichtung zur Abgabe eines Impulses je Umdrehung des Stabes aufweist, die aus einem mit dem Stab gekuppelten Magneten und einem feststehenden Magneten sowie Übertragungs- und Anzeigeeinrichtungen besteht. Hierbei werden praktisch ganze Umdrehungen des Stabes erfaßt und aus der Zahl der Impulse, die während dieser erfaßten Umdrehungen am Drehgeber auftreten, wird der Durchmesser des - immer stillstehenden - Zylinders, dort vorzugsweise der Innendurchmesser, gemessen. Diese Meßmethode ist selbstverständlich relativ ungenau und träge. Sie hat den großen Nachteil, daß sehr viele Umdrehungen des Kontaktrades je Meßvorgang die zur Berechnung des Zylinderdurchmessers verwendeten Meßimpulse erzeugen, wobei ein Fehler im ermittelten oder bekannten Durchmesser des Reibrades sich vervielfacht.

Es handelt sich dabei übrigens um eine bohrwerksartige Bearbeitungseinrichtung, offensichtlich zu Herstellung relativ kleiner Bohrungen mittels eines Drehmeißels.

US-A-3 172 208, insbesondere dort Figur 3, offenbart eine Einrichtung sowie ein diesbezügliches Verfahren zum Messen des Durchmessers von Zylindern. Hierbei ist ein an der Oberfläche des Zylinders abrollendes Kontaktrad vorgesehen, das zentrisch mit einem Drehgeber gekuppelt oder versehen ist, ferner ein mit dem Zylinder gekuppelter Impulsgeber, der mindestens je Umdrehung des Zylinders einen Impuls abgibt. Es werden für jeden einzelnen Meßvorgang wenigstens jeweils ein Anfangs- und ein Endimpuls des Drehgebers und des Impulsgebers zur Berechnung des Durchmessers ausgenutzt. Der Zylinder ist mit einem Drehgeber gekuppelt, ferner ist ein elektronischer Rechner zur Berechnung des Zylinderdurchmessers vorgesehen.

PATENT ABSTRACTS OF JAPAN Vol. 5, No. 88 (P-65) (760) 9. Juni 1981 offenbart einen numerischen Wertregler. Hierbei geht es um das Vereinfachen des Verfahrens einer Bogeninterpolation. Zu diesem Zwecke werden eine Speichereinheit sowie eine Interpoliereinheit am Arbeitsteil vorgesehen und das differenzierte Arbeitsbogen-Längensignal in ein lineares Interpolationssignal umgewandelt.

US-A-4 700 484 beschreibt ein Verfahren sowie eine Vorrichtung zum Messen des Durchmessers eines Gegenstandes. Hierbei führt ein abrollbares Rad bekannten Durchmessers eine Bewegung in drei Achsen auf und rollt auf dem drehbar gelagerten Gegenstand ab. Das Rad ist auf einer Encoder-Welle befestigt, die mit dem Umlauf des Rades Impulse erzeugt. Beim Umlaufen des Gegenstandes werden Anfangs- und Endbezugsmarken erfaßt und die durch den Wellenencoder erzeugten Impulse gezählt. Ein Mikroprozessor berechnet den Durchmesser des Gegenstandes unter Berücksichtigung des Raddurchmessers.

Erfindungsgemäß besteht die Aufgabe, eine Meßeinrichtung anzugeben, die eine äußerst große Genauigkeit von wenigstens ± 0,002 mm, vorzugsweise ± 0,001 mm, bei Zylinderdurchmessern zwischen 200 und 3000 mm ermöglicht.

Diese Aufgabe wird erfindungsgemäß durch die Merkmale des kennzeichnenden Teils von Anspruch 1 gelöst.

Nachfolgend wird die Erfindung näher erläutert. In den Figuren zeigt:

Figur 1 eine prinzipmäßige Anordnung im wesentlichen im Querschnitt und

Figur 2 eine erfindungsgemäße Anordnung in vergrößertem Maßstab in Ansicht des Zylinders bzw. teilweise im Schnitt.

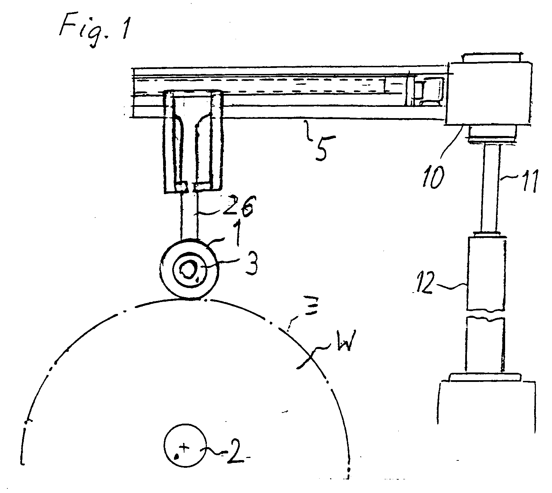

In Fig. 1 ist mit W der Zylinder oder die Walze strichpunktiert und der mit dem Zylinder gekuppelte Drehgeber mit 2 angedeutet. Das auf dem Zylinder abrollende Kontaktrad 1 ist ebenfalls mit einem angedeutet dargestellten Drehgeber 3 gekuppelt. Es wird von einer hier im wesentlichen senkrecht nach unten ragenden Haltestange 26 getragen, die hier im wesentlichen in horizontaler Richtung an einem Trägerarm 5 verschieblich geführt ist. Dieser Trägerarm ist mittels einem Drehlager 10 an einer Hubstange 11 eines Hubzylinders 12 gelagert, so daß das Kontaktrad 1 höhenverstellbar in bezug auf den jeweils vorliegenden Durchmesser des Zylinders oder der Walze ist. Mittels der horizontal verschieblichen Halterung kann das Kontaktrad genau auf den obersten Punkt des Zylinders aufgesetzt werden.

Es wird nun vorzugsweise in einem bestimmten Zeitabschnitt, also zwischen zwei Zeitimpulsen, gleichzeitig der Abrollweg des Kontaktrades 3 und der Winkelfortschritt der Walze mittels der Drehgeber erfaßt, wobei vorzugsweise die Drehimpulsgeber eine sehr hohe Impulszahl zwischen 10000 und z.B. 30000 je eigener Umdrehung aufweisen. Die Impulse (Inkremente) der Drehgeber werden zweckmäßigerweise einem Rechner zugeführt, der auch den Startpunkt (Zählbeginn) und Endpunkt (Zählende) der Impulse bestimmt, wobei der Bediener je nach gewünschter Genauigkeit das Intervall zwischen Start und Ende vorwählen kann, z.B. entsprechend 30°, 90°, 360° usw. auf dem Zylinder bzw. der Walze.

Wird nun eine sehr große Meßgenauigkeit verlangt von beispielsweise ± 0,002 mm oder sogar ± 0,001 mm, dann besteht das Problem, daß auch bei sehr hoher Auflösung (Zahl der Inkremente pro Umdrehung der Drehgeber) sowohl beim Start als auch beim Endpunkt der Messung die Drehimpulssignale nicht synchron im Rechner ankommen und damit unzulässig große Fehler entstehen. Die Erfindung führt nun diese Fehler auf ein zulässiges Maß zurück.

Die Lösung des Problems wird z.B. zweckmäßig dadurch erreicht, daß die Inkremente, die vom Meßrad herkommen, führend sind für den Start- und Endpunkt der Messung und z.B. die Inkremente, die von dem Drehgeber 2 der Walze herkommen, vom Rechner durch Interpolation erhöht werden, z.B. um den Faktor 10. Es ist auch möglich, nach dem letzten direkt im Rechner ankommenden Inkrement weitere, kleinere Inkremente innerhalb der bisherigen Inkrement-Schrittweite - also in dem an sich sonst folgenden, "normalen" Inkrement - zu erzeugen. Auf diese Weise wird erreicht, daß zu einem bestimmten Endzeitpunkt der Messung sowohl ein Meßimpuls (Ende des letzten Meßinkrementes) vom Drehgeber des Kontaktrades mit einem - durch Interpolation vom Rechner erzeugten - der Walze zuzuordnenden Impuls zusammentrifft. Auf diese Weise kann die geforderte hohe Genauigkeit erreicht werden.

Die Formel zur Berechnung des Zylinderdurchmessers D lautet

$$D = i_r . s_r/\pi . \omega_w . \Delta t,$$

wobei $\omega_w = \dfrac{i_w}{i_{wo} . \Delta t_1}$, mit $i_w$ gleich Zahl der Walzen-Meßimpulse, $i_{wo}$ = Impulszahl des Drehgebers der Walze, wobei $i_r$ gleich der Zahl der Meßimpulse (Inkremente) des Kontaktrades (1) in dem Zeitabschnitt $\Delta t$ und $\omega_w$ gleich der Winkelgeschwindigkeit des Zylinders der jeweiligen Einzelmessung sind.

Praktisch wird die Geschwindigkeit $v$ der Zylinderoberfläche Z durch das Reibrad erfaßt ($v = i_r . s_r/ \Delta t$).

Man kann natürlich auch beispielsweise die Inkremente vom Zylinder (Walze, zylindrisches Werkstück) herkommend als führend verwenden und die des Meßrades vom Rechner interpolierend ergänzen lassen. Zweckmäßig ist jedoch, eine Interpolation auf der Werkstückseite (Walze) vorzunehmen, weil deren Winkelgeschwindigkeit durch den Antrieb (Elektromotor) und die Walzenmasse hinreichend konstant ist und zwischen 3 und 30 s-1 beträgt. Auch eine entsprechende Interpolation beider Signale ist möglich, aber nicht unbedingt nötig.

Der Rechner kann auch durch Mittelwertbildung z.B. den Fortschrittsgrad der Walzenoberfläche (Zylinderdrehung) über 6 bis 10 oder 15 Inkremente in einem Abstand von z.B. 10 oder 20 Inkrementen zu einem Anfangsimpuls (Startimpuls) ermitteln, und dann wird unmittelbar anschließend die Messung mit dem Kontaktrad vorgenommen und nach der angegebenen Formel der Zylinderdurchmesser D errechnet. Dies setzt voraus, daß über diesen Meßzeitraum insgesamt die Umdrehungsgeschwindigkeit des Zylinders absolut konstant ist. Führt man aber eine Messung z.B. nur über 30° insgesamt des Zylinderumfanges durch, so dürfte diese Voraussetzung leicht gegeben sein. Man kann natürlich auch beide Messungen fast gleichzeitig vornehmen und vom Rechner auswerten lassen.

Es war ja oben davon ausgegangen worden, daß man unter Umständen nur Winkelfortschrittsgrade des Zylinders zwischen 30° und 90° für einen Meßvorgang berücksichtigt. Bevorzugt wird jedoch die oben als zweckmäßig bezeichnete Meßmethode angewendet.

Man erreicht auf diese Weise die nötige Genauigkeit entsprechend den obengenannten Anforderungen bei Zylinderdurchmessern bis zu 3000 mm.

Es ist natürlich klar, daß der Durchmesser des Kontaktrades 1 sehr genau bekannt sein und daher vorher gemessen sein muß. Es ist ja so, daß der Durchmesser dieses Kontaktrades wesentlich kleiner als der der Walze ist, so daß der Fehler zwischen Soll- und Ist-Durchmesser des Reibrades bei der Messung sich vervielfacht.

Daher ist vorzugsweise auch eine Temperatur-Kompensation vorzusehen, wenn man nicht in einem temperierten Arbeitsraum bei der Walzenherstellung arbeiten kann. Dazu gehört dann ein Temperatur-Meßgerät, das in dem Reibrad integriert ist. Mittels einer vorher ermittelten Temperatur-Korrekturfaktor-Tabelle können dann solche Temperaturänderungen mit vom Rechner berücksichtigt werden.

Vorzugsweise ist natürlich das Reibrad aus einem Werkstoff, der genau den gleichen Wärmeausdehnungskoeffizieten wie der zu bearbeitende bzw. gemessene Zylinder aufweist.

Ferner kann man von einer Rechnerroutine die Meßvorgänge so häufig durchführen lassen, daß es möglich ist, daß der Rechner eine dreidimensionale Darstellung der Walzendurchmesser erzielen kann. Man kann diese Werte vom Rechner tabellarisch ausdrucken bzw. von einem am Rechner angeschlossenen Plotter aufzeichnen lassen. Dies kann natürlich zeitversetzt in bezug auf die einzelnen Meßvorgänge erfolgen. Wenn man den Fehler durch ungenaue Durchmesser des Kontaktrades verringern will, kann man den Durchmesser desselben verhältnismäßig sehr groß wählen.

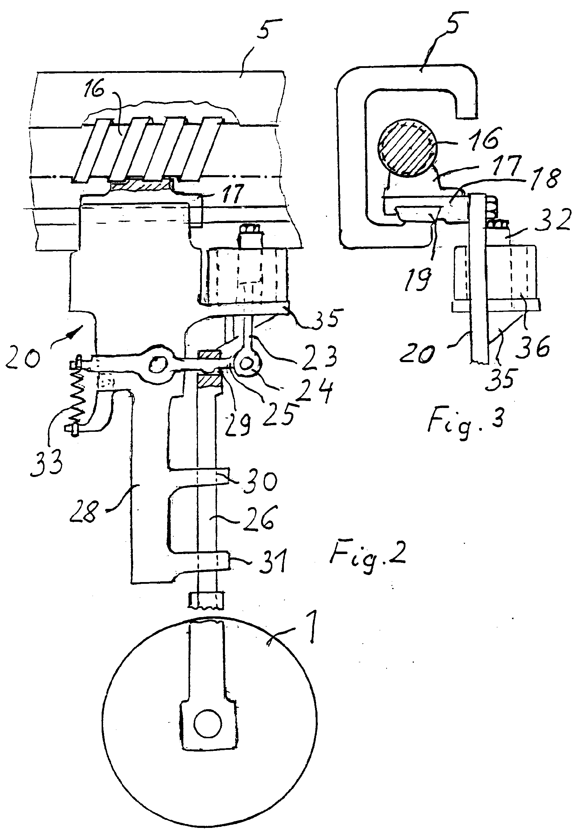

In Fig. 2 ist eine Einrichtung dargestellt, bei der das Gewicht des Kontaktrades 1 und seiner Halterung keine wesentliche Rolle für den Kontaktdruck zwischen dem Kontaktrad und der Zylinderoberfläche spielt und man also den Durchmesser des Kontaktrades relativ groß wählen kann. In diesem Falle wird das Gewicht des Kontaktrades und seiner Halterung aufgehoben und der Anpreßdruck durch eine Hebeleinrichtung mit induktiver Hebelbetätigung bewirkt. In Fig. 2 ist noch in einem Ausschnitt der Tragarm 5 für das Kontaktrad und eine Gewindespindel 16 für die Horizontalverschiebung der Halteeinrichtung desselben dargestellt. Die Gewindespindel 16 hat ein Transportgewinde, und ein Gegenstück 17 ist gegenüber dieser zum Zahneingriff gebracht. Dieses Gegenstück ist verbunden mit einer Führungsplatte 18, die auf einer Führungsbahn 19 des Haltearms 5 verschieblich gelagert ist. Die Führungsplatte 18 trägt ferner ein Führungsstück 20, das an einem Arm 28 Führungsausleger 30 und 31 zur Führung der Haltestange 26 des Reibrades 1 trägt. An einer Konsole 35 trägt das Führungsstück 20 eine Magnetanordnung mit einem Magneten 36 und einem Magnetkern 32. Der Magnetkern ist mit einem Stößel 23 verbunden, der an der Drehlagerstelle 24 an einen doppelarmigen Hebel 25 angelenkt ist. Dieser Hebel ist an seinem anderen Ende von einer Feder 33 belastet. Der erste Hebelarm trägt die Haltestange 26 des Reibrades in einer Ausnehmung 29 derselben. Das Gewicht des Reibrades und der Haltestange wird durch die Feder 33 in bezug auf den zu messenden Zylinder aufgehoben, und der Anpreßdruck des Reibrades wird durch die induktiven Kräfte der Magnetanordnung erzeugt. Die nötigen elektrischen Leitungen sind hier nicht dargestellt.

Das bevorzugte Anwendungsgebiet der Erfindung ist die Walzenherstellung in Walzenschleifmaschinen, um die Walze sehr genau auf die Soll-Durchmesser zu schleifen, auch bei ballig zu schleifenden Zylindern (Walzen).

**Patentansprüche**

1.  Verfahren zur Messung von Durchmessern von Zylindern, insbesondere von Werkstücken, auf Walzenschleifmaschinen, mittels einem Kontaktrad (1), das an der Oberfläche des festen Körpers abrollt und einem damit zentrisch gekuppelten oder versehenen ersten inkrementalen Drehgeber (3) sowie einem zweiten inkrementalen Drehgeber (2) des festen Körpers, wobei je Meßvorgang mindestens je ein Anfangs- und ein Endimpuls eines der Drehgeber zu Berechnung des Durchmessers benutzt werden, wobei aus der Zahl der Impulse ($i_w$) des zweiten Drehgebers der Fortschrittswinkel des Zylinders und eine diesem Fortschrittswinkel entsprechende Umfangsstrecke des Zylinders aus der Zahl der Impulse ($i_r$) des ersten Drehgebers (3) des Kontaktrades (1), multipliziert mit der einem dieser Winkelinkremente entsprechenden Umfangsstrecke ($s_r$) gebildet wird zur Berechnung des Zylinderdurchmessers (D), dadurch gekennzeichnet, daß je Meßvorgang von einem Rechner durch Interpolation der registrierten Impulse mindestens eines der Drehgeber - vorzugsweise desjenigen des Zylinders - mindestens eine Reihe Impulse innerhalb des Schrittweite der Inkremente des mindestens einen Drehgebers erzeugt wird, so daß einer dieser durch Interpolation erzeugten Impulse mit erhöhter Genauigkeit zum quasi gleichen Zeitpunkt mit dem End impuls des anderen Drehgebers zusammentrifft, und daß die Berechnung des Durchmessers nach der Formel

$$D = i_r . s_r / . \omega_w . \Delta t$$

erfolgt, wobei $i_r$ gleich der Zahl der Impulse des Drehgebers des Kontaktrades (1) in dem Zeitabschnitt $\Delta$t und $\omega_w$ gleich der Winkelgeschwindigkeit des Zylinders der jeweiligen Einzelmessung, die aus der Zahl ($i_w$) der Impulse des zweiten Drehgebers, der Impulszahl je Umdrehung ($i_{wo}$) des zweiten Drehgebers und dem Zeit abschnitt ($\Delta$t) hervorgeht, sind.

**Claims**

1.  A process for measuring diameters of cylinders, in particular of workpieces, on roll grinding machines, by means of a contact wheel (1), which rolls on the surface of the solid body and a first incremental shaft encoder (3) coupled or provided therewith in the centre and also a second incremental shaft encoder (2) of the solid body, whereby for each measuring operation at least one initial and one end pulse of one of the shaft encoders are used to calculate the diameter, whereby from the number of pulses ($i_w$) of the second shaft encoder the angle of advance of the cylinder and a circumferential distance of the cylinder corresponding to this angle of advance is formed from the number of pulses ($i_r$) of the first shaft encoder (3) of the contact wheel (10), multiplied with the circumferential distance ($s_r$) corresponding to one of these angle increments for the calculation of the cylinder diameter (D), **characterised in that** at least one series of pulses within the increment range of at least one shaft encoder is produced for each measuring operation by a computer by interpolation of the recorded pulses of at least one of the shaft encoders - preferably that of the cylinder - so that one of these pulses produced by interpolation having increased accuracy coincides at the same time with the end pulse of the other shaft encoder, and in that the calculation of the diameter is performed using the formula

$$D = i_r . s_r / . \omega_w . \Delta t$$

in which $i_r$ is equal to the number of pulses of the shaft encoder of the contact wheel (1) in the time span t and $\omega_w$ is equal to the angular velocity of the cylinder of the respective individual measurement, which comes from the number ($i_w$) of the pulses of the second shaft encoder, the pulse number per rotation ($i_{wo}$) of the second shaft encoder and the time span ($\Delta$t).

## Revendications

1.  Procédé de mesure des diamètres de cylindres, en particulier de pièces à usiner sur des machines à rectifier les cylindres, au moyen d'une roue de contact (1), qui roule sur la surface du corps fixe et au moyen d'un premier détecteur de rotation incrémental (3) pourvu ou couplé de façon centrale avec ce corps ainsi que d'un deuxième détecteur incrémental de rotation (2) du corps fixe, lors de chaque processus de mesure au moins une impulsion initiale et une impulsion finale de l'un des détecteurs de rotation étant utilisées pour calculer le diamètre, l'angle d'avancement du cylindre étant formé à partir du nombre des impulsions ($i_w$) du deuxième détecteur de rotation et une distance périphérique correspondant à cet angle d'avancement du cylindre étant formée à partir du nombre des impulsions ($i_r$) du premier détecteur de rotation (3) de la roue de contact, multiplié par la distance périphérique ($s_r$) correspondant à l'un de ces incréments angulaires pour calculer le diamètre du cylindre (D), procédé caractérisé en ce que lors de chaque processus de mesure, on produit à l'aide d'un calculateur, par interpolation des impulsions enregistrées d'au moins l'un des détecteurs de rotation - de préférence de celui du cylindre-, au moins une série d'impulsions à l'intérieur du pas de progression des incréments d'au moins l'un des détecteurs de rotation, de telle sorte que l'une ou ces impulsions produites par interpolation coïncide avec précision presque au même instant avec l'impulsion finale de l'autre détecteur de rotation et en ce que l'on effectue le calcul du diamètre à l'aide de la formule :

$$D = I_r \cdot S_r / \cdot \omega_w \cdot \Delta t$$

dans laquelle $i_r$ est égal au nombre des impulsions du détecteur de rotation de la roue de contact (1) dans l'intervalle de temps $\Delta t$ et $\omega_w$ est égal à la vitesse angulaire du cylindre de la mesure individuelle correspondante, qui ressort du nombre ($i_w$) des impulsions du deuxième détecteur de rotation, du nombre d'impulsions par révolution ($i_{wo}$) du deuxième détecteur de rotation et de l'intervalle de temps $\Delta t$.

Fig. 1

Fig. 3

Fig. 2